# EUROPÄISCHE PATENTSCHRIFT

(11) **EP 3 409 570 B1**
(45) Veröffentlichungstag und Bekanntmachung des Hinweises auf die Patenterteilung: **08.04.2020**
(21) Anmeldenummer: 18173648.9
(22) Anmeldetag: 22.05.2018
(51) Int. Cl.: B62J 6/02, B62K 21/22, B62J 15/00, B62J 99/00

(54) **FAHRRADBAUSATZ MIT EINER FAHRRADARMATUR**
BICYCLE MODULE WITH A BICYCLE FITTING
MODULE DE BICYCLETTE AVEC MONTAGE DE BICYCLETTE

(30) Priorität: 29.05.2017 DE 102017111647
(43) Veröffentlichungstag der Anmeldung: 05.12.2018
(73) Patentinhaber: Kettler Alu-Rad GmbH, 50739 Köln (DE)
(72) Erfinder: Fiegl, Thomas, 64367 Mühltal (DE); Pohl, Achim, 64342 Seeheim-Jugenheim (DE)
(74) Vertreter: WSL Patentanwälte Partnerschaft mbB

(56) Entgegenhaltungen:
- EP-A1- 1 410 982
- EP-A2- 1 201 534
- EP-A2- 1 564 122
- CN-U- 205 131 538
- DE-U1- 20 119 499
- DE-U1-202013 008 371
- JP-A- 2010 285 138

## Beschreibung

Die vorliegende Erfindung betrifft einen Fahrradbausatz aufweisend eine Fahrradarmatur und einen Lenkervorbau mit zwei voneinander beabstandeten Lenkervorbauarmen, wobei jeder Lenkervorbauarm ein freies Ende mit einer Lenkerklemme aufweist und mit den Lenkerklemmen eine Lenkstange befestigbar ist, wobei die Fahrradarmatur einen Befestigungsabschnitt zur Befestigung der Fahrradarmatur an einer Lenkstange und einen ersten Schenkelabschnitt mit zwei Enden aufweist, wobei ein Ende des ersten Schenkelabschnitts mit dem Befestigungsabschnitt verbunden ist und der erste Schenkelabschnitt ein Anzeige- und/oder Bedienelement aufweist.

Ein Lenkervorbau dient der Befestigung einer Lenkstange an einem Fahrradrahmen, wobei ein Ende des Lenkervorbaus mit einem Steuerrohr des Fahrradrahmens befestigt ist oder mit einem Steuerrohr verbunden kann. Mit den an jedem der Lenkervorbauarmen angeordneten Lenkerklemmen kann eine Lenkstange befestigt werden.

Fahrradarmaturen dienen der Unterstützung eines Fahrradfahrers beim Fahrradfahren durch die Bereitstellung von Informationen oder durch die Bereitstellung von Bedienungshilfen. Fahrradarmaturen weisen daher ein Anzeige- und/oder Bedienelement auf, das während der Fahrt für den Fahrradfahrer leicht zugänglich sein soll. Die Fahrradarmatur wird hierzu mit dem Befestigungsabschnitt an einer Lenkstange befestigt, wobei der Befestigungsabschnitt mit einem der beiden Enden des ersten Schenkelabschnittes verbunden ist.

Fahrradarmaturen zum Bereitstellen eines Fahrlichtes oder zum Anzeigen von Navigationsdaten, von Geschwindigkeitsdaten, von Informationen über die zurückgelegte Fahrtstrecke, Trittfrequenz, Uhrzeit, etc. sind in vielfältiger Art bekannt. Fahrradarmaturen für ein E-Bike umfassen häufig ein Anzeigeelement zum Anzeigen von Motorparametern und/oder den Ladezustand der Batterie bzw. des Akkumulators sowie ein Bedienelement für die Steuerung der Motorleistung. Will ein Fahrradfahrer auf mehrere Funktionen zugreifen, müssen entsprechend viele verschiedene Fahrradarmaturen an der Lenkstange angeordnet werden. Der Platz für die Anordnung von Fahrradarmaturen an einer Lenkstange ist jedoch begrenzt. Sind mehrere Funktionen in einer Fahrradarmatur zusammengefasst, ist die Fahrradarmatur meist im Vergleich zu den einzelnen Fahrradarmaturen mit einer vergleichbaren Funktionalität größer und schränkt so den Platz für weitere Fahrradarmaturen ein.

Fahrradarmatur und Lenkervorbau sind oftmals nicht aufeinander abgestimmt. Sowohl die Fahrradarmatur als auch der Lenkervorbau sind jedoch mit einer Lenkstange verbindbar, sodass die Fahrradarmatur und der Lenkervorbau beide ausreichend Platz für ihre Befestigung an der Lenkstange benötigen.

Die Druckschrift JP 2010-285138 A offenbart alle Merkmale des Oberbegriffs des Anspruchs 1, und betrifft einen Fahrradbausatz mit einer Lampe, die zwischen zwei voneinander beabstandeten Lenkervorbauarmen angeordnet ist.

Eine Aufgabe der vorliegenden Erfindung ist es daher, einen handliche, multifunktionalen und platzsparend an einer Lenkstange anbringbaren Fahrradbausatz mit einer Fahrradarmatur bereitzustellen.

Zumindest eine dieser Aufgaben wird durch eine Fahrradbausatz der eingangs genannten Art gelöst, wobei ein erstes Ende eines zweiten Schenkelabschnittes der Fahrradarmatur mit dem Befestigungsabschnitt verbunden ist und der zweite Schenkelabschnittes eine Leuchteinrichtung aufweist, wobei die Lenkerklemmen und der Befestigungsabschnitt der Fahrradarmatur derart an einer Lenkstange befestigbar sind, dass der erste Schenkelabschnitt zumindest teilweise zwischen den Lenkervorbauarmen angeordnet ist, wobei das Anzeige- und/oder Bedienelement Teil eines Fahrradcomputers ist.

Im Sinne der vorliegenden Erfindung implizieren die Begriffe "erster Schenkelabschnitt" und "zweiter Schenkelabschnitt" sowie die Verbindung des ersten Schenkelabschnittes und die Verbindung des zweiten Schenkelabschnittes mit dem Befestigungsabschnitt, dass der erste Schenkelabschnitt und der zweite Schenkelabschnitt voneinander abgegrenzte Abschnitte der Fahrradarmatur mit unterschiedlicher Funktionalität bezeichnen.

Der erste Schenkelabschnitt weist das Anzeige- und/oder Bedienelement auf, welches in einem Zustand in dem die Fahrradarmatur an einer Lenkstange zweckmäßigerweise derart befestigt ist, dass die mit dem Anzeigeelement angezeigten Informationen während einer Fahrt auf dem Fahrrad für einen Fahrer des Fahrrads erfassbar sind und/oder das Bedienelement während einer Fahrt auf dem Fahrrad durch den Fahrer bedienbar ist. Gleichzeitig sollte der zweite Schenkelabschnitt mit der Leuchteinrichtung derart ausgerichtet sein, dass mit der Leuchteinrichtung ein vor einem Fahrrad mit der erfindungsgemäßen Fahrradbausatz liegender Wegabschnitt ausgeleuchtet werden kann.

Der Befestigungsabschnitt dient der Anbringung der Fahrradarmatur an einer Lenkstange, sodass der erste Schenkelabschnitt und der zweite Schenkelabschnitt jeweils mit Hilfe des Befestigungsabschnittes an einer Lenkstange befestigbar sind. Der erste Schenkelabschnitt und der zweite Schenkelabschnitt müssen insofern nicht unmittelbar miteinander verbunden sein, sondern es genügt im Sinne der vorliegenden Erfindung, dass sowohl der erste Schenkelabschnitt als auch der zweite Schenkelabschnitt mit dem Befestigungsabschnitt verbunden sind. Da der erste Schenkelabschnitt ein Anzeige- und/oder Bedienelement und der zweite Schenkelabschnitt eine Leuchteinrichtung aufweisen, sind auf diese Weise mehrere Funktionen der eingangs beschriebenen Fahrradarmaturen in einer Fahrradarmatur zusammengefasst.

Die Fahrradarmatur und der Lenkervorbau sind derart aufeinander abgestimmt, dass die Lenkerklemmen und der Befestigungsabschnitt derart an einer Lenkstange befestigbar sind, dass der erste Schenkelabschnitt zumindest teilweise zwischen den Lenkervorbauarmen angeordnet ist. Somit ist die Fahrradarmatur besonders platzsparend an einer Lenkstange befestigbar. Sind die Lenkervorbauarme mit einer Lenkstange verbunden, erstreckt sich der zwischen den Lenkervorbauarmen angeordnete Zwischenraum entlang der Längserstreckung der Lenkstange. Der zwischen den zwei Lenkervorbauarmen angeordnete erste Schenkelabschnitt der Fahrradarmatur ist somit mittig mit Bezug zu einer an dem Lenkervorbau befestigten Lenkstange anordnenbar. Während einer Fahrt mit einem Fahrrad, welches den an einer Lenkstange befestigten erfindungsgemäßen Fahrradbausatz aufweist, kann ein Fahrer das Anzeige- und/oder Bedienelement mit beiden Händen bedienen und/oder die mit dem Anzeigeelement angezeigten Informationen ablesen.

Der erfindungsgemäße Fahrradbausatz mit einer Fahrradarmatur ist somit handlich, multifunktional und platzsparend an einer Lenkstange anbringbar.

Ist der Lenkervorbau verstellbar, kann die Neigung einer mit dem Lenkervorbau verbundenen Lenkstange gegenüber dem Steuerrohr eingestellt werden.

Damit der Befestigungsabschnitt an einer Lenkstange befestigbar ist, weist der Befestigungsabschnitt in einer erfindungsgemäßen Ausführungsform zwei fluchtend zueinander angeordnete Öffnungen für die Durchführung einer Lenkstange und eine die Mittelpunkte der zwei Öffnungen miteinander verbindende Längsachse auf. Für die Befestigung der Fahrradarmatur an einer Lenkstange wird die Lenkstange durch die zwei fluchtend zueinander angeordneten Öffnungen geführt, sodass der Befestigungsabschnitt zumindest teilweise die Lenkstange umgreift.

In einer Ausführungsform ist der Befestigungsabschnitt eine Lenkerklemme. Die Lenkerklemme kann einteilig, zweiteilig oder mehrteilig ausgeführt sein. Die Lenkerklemme kann zumindest abschnittsweise eine Lenkstange derart in Umfangsrichtung umgreifen, dass die Lenkstange mit der Lenkerklemme eingeklemmt und so vorzugsweise dreh- und translationsfest gegenüber der Fahrradarmatur gehalten wird.

In einer erfindungsgemäßen Ausführungsform weisen der erste Schenkelabschnitt und der zweite Schenkelabschnitt in einer Ebene senkrecht zu der Längsachse des Befestigungsabschnittes jeweils eine Mittellinie auf, wobei eine Ausgleichsgerade durch die Mittellinie des ersten Schenkelabschnitts und eine Ausgleichsgerade durch die Mittellinie des zweiten Schenkelabschnitts einen Winkel α von größer oder gleich 60° und kleiner 180°, vorzugsweise einen Winkel von 120° bis 170°, einschließen. Im Sinne der vorliegenden Erfindung ist die Mittellinie eine gedachte Linie, die in einer Ebene senkrecht zu der Längsachse des Befestigungsabschnittes die geometrische Mittellinie von dem ersten Ende bis zu dem zweiten Ende des jeweiligen Schenkelabschnitts kennzeichnet. Hat der erste und/oder zweite Schenkelabschnitt in einer Ebene senkrecht zu der Längsachse des Befestigungsabschnittes ein symmetrisches Profil, entspricht die Mittellinie der Symmetrieachse des jeweiligen Schenkels, wobei die Ausgleichsgerade durch die Mittellinie und die Mittellinie deckungsgleich sind. Beispielsweise können der erste und zweite Schenkelabschnitt in einer Ebene senkrecht zu der Längsachse des Befestigungsabschnittes ein Rechteckprofil haben.

Ist der Winkel α zwischen der Ausgleichsgeraden durch die Mittellinie des ersten Schenkelabschnitts und der Ausgleichsgerade durch die Mittellinie des zweiten Schenkelabschnitts größer oder gleich 60° und kleiner als 180°, sind der erste Schenkelabschnitt und der zweite Schenkelabschnitt derart mit dem Befestigungsabschnitt an einer Lenkstange anordnenbar, dass der erste Schenkelabschnitt mit dem Anzeige- und/oder Bedienelement näher zu einem Fahrer eines Fahrrads mit einer an der Lenkstange des Fahrrads befestigten Fahrradarmatur gemäß der vorliegenden Erfindung angeordnet ist als der zweite Schenkelabschnitt mit der Leuchteinrichtung. Auf diese Weise ist das Anzeige- und/oder Bedienelement während der Fahrt von einem Fahrer bedienbar, während mit der Leuchteinrichtung ein in Fahrrichtung vor dem Fahrrad liegender Wegabschnitt beleuchtet werden kann. Im Sinne der vorliegenden Erfindung ist die Fahrrichtung die Richtung eines Fahrrads in die die Laufrichtung des Vorderrads zeigt. Insofern ist die erfindungsgemäße Fahrradarmatur derart mit dem Befestigungsabschnitt an einer Lenkstange befestigbar, dass der erste Schenkelabschnitt mit dem Anzeige- und/oder Bedienelement in Fahrrichtung hinter dem Lenker, d.h. näher an dem Fahrer des Fahrrads, und der zweite Schenkelabschnitt in Fahrrichtung vor dem Lenker, d.h. weiter von dem Fahrer des Fahrrads entfernt, anordenbar ist.

In einer Ausführungsform der erfindungsgemäßen Fahrradarmatur schneiden die Ausgleichsgerade durch die Mittellinie des ersten Schenkelabschnitts und die Ausgleichsgerade durch die Mittellinie des zweiten Schenkelabschnitts in einer Ebene senkrecht zu der Längsachse des Befestigungsabschnittes die Längsachse des Befestigungsabschnittes.

In einer erfindungsgemäßen Ausführungsform sind der erste Schenkelabschnitt und der zweite Schenkelabschnitt unlösbar mit dem Befestigungsabschnitt verbunden. Eine Verbindung ist im Sinne der Erfindung unlösbar, wenn die miteinander verbundenen Teile nicht ohne eine Beschädigung zumindest eines der Teile voneinander getrennt werden können. Eine unlösbare Verbindung im Sinne der Erfindung ist vorzugsweise eine einstückig Verbindung, bei der der erste Schenkelabschnitt, der zweite Schenkelabschnitt und der Befestigungsabschnitt nahtlos aus einem Material gefertigt sind. Die unlösbare Verbindung des ersten Schenkelabschnittes mit dem Befestigungsabschnitt und die unlösbare Verbindung des zweiten Schenkelabschnitte mit dem Befestigungsabschnitt bewirken, dass der erste Schenkelabschnitt und der zweite Schenkelabschnitt eine vorbestimmte Ausrichtung zu dem Befestigungsabschnitt und damit zueinander aufweisen.

In einer erfindungsgemäßen Ausführungsform ist die Leuchteinrichtung verschwenkbar an dem zweiten Schenkelabschnittes angeordnet. Vorzugsweise ist die Leuchteinrichtung in einer Ebene senkrecht zu der Längsachse des Befestigungsabschnitts verschwenkbar. Die Verschwenkbarkeit der Leuchteinrichtung ermöglicht, dass die Leuchteinrichtung relativ zu dem zweiten Schenkelabschnitt ausgerichtet werden kann. Ist die Fahrradarmatur mit Hilfe des Befestigungsabschnittes an einer Lenkstange eines Fahrrads befestigt, kann die schwenkbare Leuchteinrichtung in Richtung des auszuleuchtenden Wegabschnittes verschwenkt werden.

In einer erfindungsgemäßen Ausführungsform des Fahrradbausatzes weist der Befestigungsabschnitt zwei fluchtend zueinander angeordneten Öffnungen für die Durchführung einer Lenkstange und eine die Mittelpunkte der zwei Öffnungen miteinander verbindende Längsachse auf, wobei der Lenkervorbau und die Fahrradarmatur derart ausgestaltet und anordnenbar sind, dass zwischen dem ersten Schenkelabschnitt und jedem der Lenkervorbauarme in eine Richtung parallel zu der Längsachse des Befestigungsabschnittes ein Spalt von maximal 5 % des lichten Abstandes zwischen den Lenkervorbauarmen in eine Richtung parallel zu der Längsachse des Befestigungsabschnittes ausgebildet ist. Der erste Schenkelabschnitt hat eine sich parallel zu der Längsachse des Befestigungsabschnittes erstreckende Breite, die in etwa dem Abstand zwischen den Lenkervorbauarmen entspricht. Auf diese Weise ist der Zwischenraum annähernd vollständig durch den ersten Schenkelabschnitt der Fahrradarmatur ausgenutzt.

In einer erfindungsgemäßen Ausführungsform sind die Lenkerklemmen der Lenkervorbauarme und der Befestigungsabschnitt der Fahrradarmatur getrennt voneinander betätigbar. Durch die getrennte Betätigbarkeit der Lenkerklemmen der Lenkervorbauarme und des Befestigungsabschnittes sind die Ausrichtung des Lenkervorbaus und die Ausrichtung der Fahrradarmatur relativ zu einer mit der Fahrradarmatur und dem Lenkervorbau verbundenen Lenkstange getrennt voneinander einstellbar. Auf diese Weise kann die Orientierung einer Lenkstange relativ zu dem Lenkervorbau unabhängig von einer Orientierung der Fahrradarmatur gegenüber der Lenkstange eingestellt werden. Insbesondere wenn der erste Schenkelabschnitt und der zweite Schenkelabschnitt jeweils unlösbar mit dem Befestigungsabschnitt verbunden sind, kann die Ausrichtung der Fahrradarmatur relativ zu der Lenkstange unabhängig von der Ausrichtung des Lenkervorbaus relativ zu der Lenkstange erhalten bleiben. Vorzugsweise ist die Fahrradarmatur um die Längsachse des Befestigungsabschnitt relativ zu einer mit dem Befestigungsabschnitt verbindbaren Lenkstange drehbar.

In einer erfindungsgemäßen Ausführungsform des Fahrradbausatzes sind der Lenkervorbau und die Fahrradarmatur derart ausgestaltet und mit einer Lenkstange verbindbar, dass in einer Ebene senkrecht zu der Längsachse des Befestigungsabschnittes der erste Schenkelabschnitt vollständig in den Zwischenraum zwischen den Lenkervorbauarmen anordnenbar ist. Im Sinne der vorliegenden Erfindung ist der erste Schenkelabschnitt vollständig in dem Zwischenraum zwischen den Lenkervorbauarmen anordnenbar, wenn der erste Schenkelabschnitt in einer Draufsicht auf eine Ebene senkrecht zu der Längsachse des Befestigungsabschnittes ein Lenkervorbauarm die Sicht auf den in dem Zwischenraum angeordneten ersten Schenkelabschnitt verdeckt, d.h. die Kontur des ersten Schenkelabschnittes liegt vollständig in der Kontur des Lenkervorbauarms.

In einer erfindungsgemäßen Verwendung des Fahrradbausatzes sind der Lenkervorbau und die Fahrradarmatur derart mit einer Lenkstange von einem Fahrrad verbunden, dass der erste Schenkelabschnitt in dem Zwischenraum zwischen den Lenkervorbauarmen derart angeordnet ist, dass das Anzeige- und/oder Bedienelement einem Fahrer zuwendbar ist, wobei der zweite Schenkelabschnitt derart angeordnet ist, dass mit der Leuchteinrichtung des zweiten Schenkelabschnitts ein Wegabschnitt in Fahrtrichtung ausleuchtbar ist. Mit anderen Worten weist in einer Ebene senkrecht zu der Längsachse des Befestigungsabschnittes das freie Ende des ersten Schenkelabschnitts in eine Richtung entgegen der Fahrrichtung, während die Leuchteinrichtung und das freie Ende des zweiten Schenkelabschnitts in die Fahrrichtung weisen.

Weitere Vorteile, Merkmale und Anwendungsmöglichkeiten der vorliegenden Erfindung werden anhand der vorliegenden Beschreibung einer Ausführungsform und der dazugehörigen Figuren deutlich, wobei gleiche Bezugszeichen auf gleiche Elemente verweisen. Es zeigen:
- Figur 1: einen Fahrradbausatz in einer Explosionsansicht gemäß einer Ausführungsform der vorliegenden Erfindung,
- Figur 2: den Fahrradbausatz aus Figur 1 in einer teilweisen Explosionsansicht,
- Figur 3: den Fahrradbausatz aus den Figuren 1 und 2 in einem ersten montierten Zustand,
- Figur 4: den Fahrradbausatz aus Figur 3 in einer Seitenansicht,
- Figur 5: den Fahrradbausatz aus den Figuren 1 und 2 in einem zweiten montierten Zustand in einer Seitenansicht,
- Figur 6: den Fahrradbausatz aus den Figuren 1 und 2 in einem dritten montierten Zustand in einer Seitenansicht,
- Figur 7: den Fahrradbausatz aus den Figuren 1 und 2 in einem montierten Zustande in einer Ansicht in Fahrtrichtung,
- Figur 8: die Fahrradarmatur aus dem Fahrradbausatz gemäß den Figur 1 bis 7 in einer Sei-tenansicht, und
- Figur 9: die Fahrradarmatur aus Figur 8 in einer perspektivischen Ansicht.

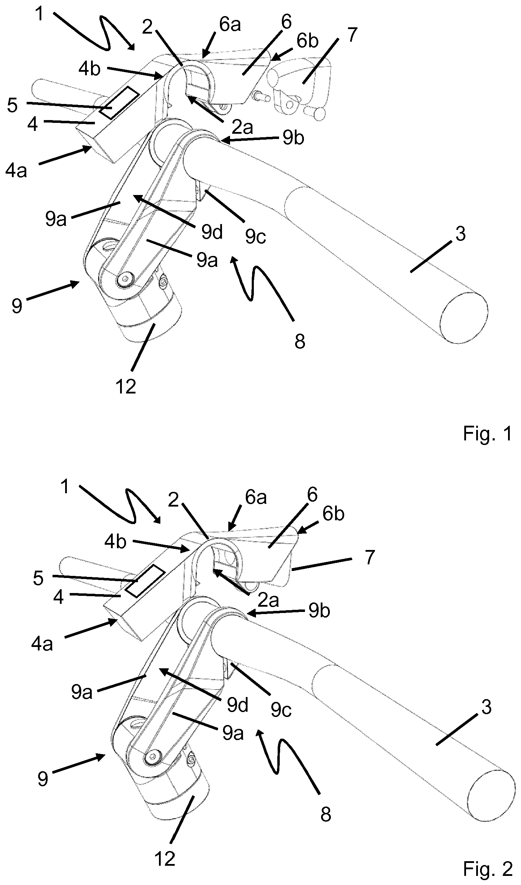

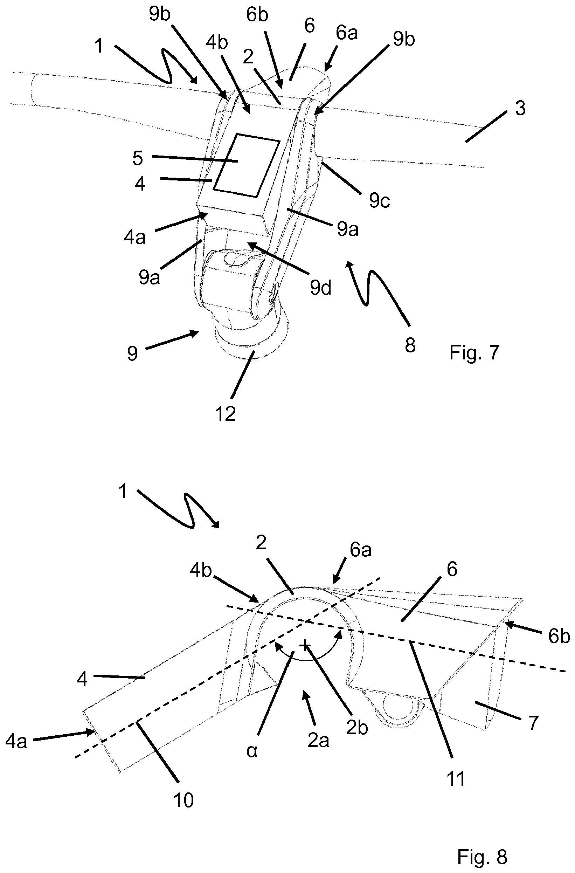

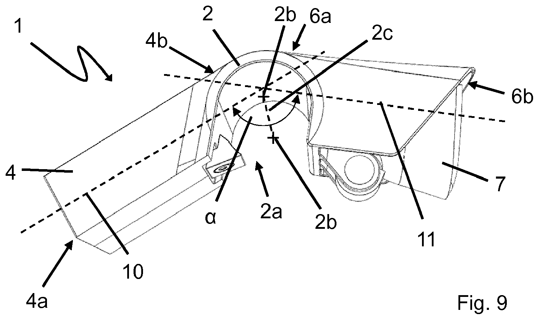

Die Figuren 1 bis 7 zeigen einen Fahrradbausatz 8 mit einem Lenkervorbau 9 und einer Fahrradarmatur 1 gemäß einer Ausführungsform der vorliegenden Erfindung. Die Figuren 8 und 9 zeigen die Fahrradarmatur 1 des Fahrradbausatzes 8 aus den Figuren 1 bis 7 in Alleinstellung. Es versteht sich, dass die in Alleinstellung beschriebene Fahrradarmatur 1 als Teil eines Fahrradbausatzes 8 gemäß der vorliegenden Erfindung ausgestaltet ist.

Die Fahrradarmatur 1 weist einen Befestigungsabschnitt 2 zum Befestigen der Fahrradarmatur 1 an einer Lenkstange 3 auf. Der Befestigungsabschnitt 2 ist eine Lenkerklemme, mit der zumindest abschnittsweise eine Lenkstange 3 in Umfangsrichtung der Lenkstange 3 umgreifbar ist. Der Befestigungsabschnitt 2 weist hierzu zwei fluchtend zueinander angeordnete Öffnungen 2a mit je einem Mittelpunkt 2b und eine die Mittelpunkte 2b der Öffnungen 2a verbindende Längsachse 2c auf. Ist die Fahrradarmatur 1 mit Hilfe des Befestigungsabschnitts 2 an einer Lenkstange 3 befestigt, erstreckt sich die Längsachse 2c des Befestigungsabschnittes 2 parallel zu der Längsachse des Lenkstangenabschnittes, der durch die Öffnungen 2a des Befestigungsabschnittes geführt ist.

Weiter weist die Fahrradarmatur 1 einen ersten Schenkelabschnitt 4 mit zwei Enden 4a, 4b und ein Anzeige- und/oder Bedienelement 5 auf, wobei das zweite Ende 4b unlösbar mit dem Befestigungsabschnitt 2 verbunden ist.

Ein zweiter Schenkelabschnitt 6 der Fahrradarmatur 1 hat zwei Enden 6a, 6b und eine Leuchteinrichtung 7. Die Leuchteinrichtung 7 ist in einer Ebene senkrecht zu der Längsachse des Befestigungsabschnitts 2 verschwenkbar an dem zweiten Schenkelabschnitt 6 angeordnet. Die verschwenkbare Anordnung ermöglicht es, die Leuchteinrichtung 7 entsprechend der Anordnung der Fahrradarmatur 1 an einer Lenkstange 3 derart auszurichten, dass mit der Leuchteinrichtung 7 ein Wegabschnitt in Richtung der beabsichtigen Fahrtrichtung ausgeleuchtet werden kann.

Auch das erste Ende 6a des zweiten Schenkelabschnittes 6 ist unlösbar mit dem Befestigungsabschnitt 2 verbunden. Somit sind sowohl der erste Schenkelabschnitt 4 als auch der zweite Schenkelabschnitt 6 unlösbar mit dem Befestigungsabschnitt 2 verbunden, wobei in einer Ebene senkrecht zu der Längsachse des Befestigungsabschnittes 2 eine Ausgleichsgerade 10 durch die Mittellinie des ersten Schenkelabschnitts 4 und eine Ausgleichsgerade 11 durch die Mittellinie des zweiten Schenkelabschnitts 6 einen Winkel α von 120° bis 170°, einschließen. Der erste Schenkelabschnitt 4 hat in einer Ebene senkrecht zu der Längsachse des Befestigungsabschnittes 2 ein Rechteckprofil, sodass die Ausgleichsgerade der Mittellinie des ersten Schenkellabschnittes 4 entspricht.

Die Fahrradarmatur 1 bildet zusammen mit einem Lenkervorbau 9 einen Fahrradbausatz 8, wie er in den Figuren 1 bis 7 dargestellt ist. Der Lenkervorbau 9 weist zwei voneinander beabstandete Lenkervorbauarme 9a auf. Jeder Lenkervorbauarm 9 hat ein freies Ende 9b an dem eine Lenkerklemme 9c angeordnet ist. Mit der Lenkerklemme 9 ist eine Lenkerstange 3 befestigbar. Die Fahrradarmatur 1 und der Lenkervorbau 9 sind derart aufeinander abgestimmt, dass die Lenkerklemmen 9c und der Befestigungsabschnitt 2 derart an der Lenkstange 3 befestigbar sind, dass der erste Schenkelabschnitt 4 zumindest abschnittsweise zwischen den Lenkervorbauarmen 9a angeordnet werden kann. Der erste Schenkelabschnitt 4 ist somit in eine Richtung entlang der Längsachse 2c des Befestigungsabschnittes 2 zwischen den Lenkervorbauarmen 9a angeordnet.

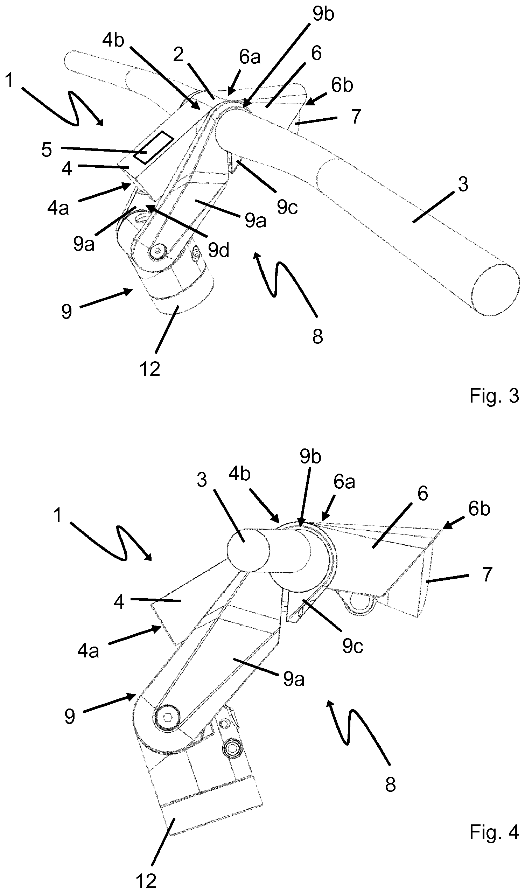

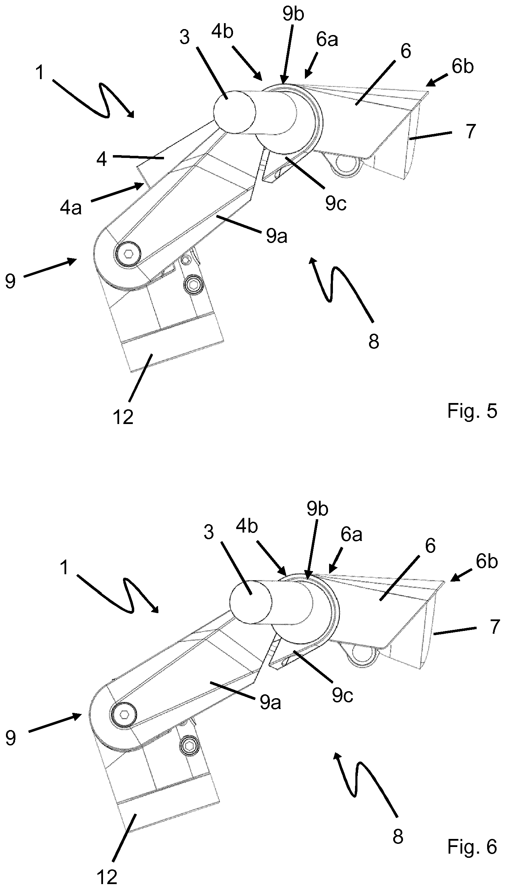

Die Lenkerklemmen 9c und der Befestigungsabschnitt 2 sind unabhängig voneinander betätigbar, sodass der Lenkervorbau 9 und die Fahrradarmatur 1 unabhängig voneinander an der Lenkstange 3 befestigbar und auch unabhängig voneinander gegenüber der Lenkstange 3 ausgerichtet werden können. Wird die Neigung des Lenkervorbaus 9 gegenüber einem Steuerrohr 12 (in den Figuren nur angedeutet) verändert, kann die Ausrichtung der Fahrradarmatur 1 und damit die Ausrichtung des Anzeige- und/oder Bedienelement 5 und die Ausrichtung der Leuchtreinrichtung 7 erhalten bleiben. Wie es insbesondere in den Figuren 4 bis 6 gezeigt ist, ist die Fahrradarmatur 1 und der Lenkervorbau 9 derart ausgestaltet und an einer Lenkstange 3 befestigt, dass der erste Schenkelabschnitt 4 in Abhängigkeit von dem eingestellten Neigungswinkel des Lenkervorbaus 9 unterschiedlich weit in den Zwischenraum zwischen den Lenkervorbauarmen 9a eintaucht. In der Figur 6 gut erkennbar, sind die Fahrradarmatur 1 und der Lenkervorbau 9 derart ausgestaltet und angeordnet, dass der erste Schenkelabschnitt 4 vollständig in dem Zwischenraum zwischen den Lenkervorbauarmen 9a angeordnet werden kann. Zwischen dem ersten Schenkelabschnitt 4 und jedem der Lenkervorbauarme 9a ist in eine Richtung parallel zu der Längsachse 2c des Befestigungsabschnittes 2 ein Spalt von maximal 5% des lichten Abstandes zwischen den Lenkervorbauarmen 9a in eine Richtung parallel zu der Längsachse 2c des Befestigungsmittels ausgebildet.

In jedem Fall, ist der erste Schenkelabschnitt näher an einem Fahrer eines Fahrrads mit dem Fahrradbausatz 8 angeordnet als der zweite Schenkelabschnitt. Der erste Schenkelabschnitt 4 ist in Fahrrichtung vor der Lenkstange 3, d.h. zwischen dem Hinterrad eines Fahrrads und der Lenkstange 3, und der zweite Schenkelabschnitt 6 ist in Fahrrichtung hinter der Lenkstange 3, d.h. auf der von dem Hinterrad eines Fahrrads abgewandten Seite der Lenkstange 3 angeordnet. In den Figuren 3 bis 6 erstreckt sich die Fahrrichtung von Links nach Rechts.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarerer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Fahrradarmatur
- 2: Befestigungsabschnitt
- 2a: Öffnung des Befestigungsabschnitts 2
- 2b: Mittelpunkt der Öffnung 2b
- 2c: Längsachse
- 3: Lenkstange
- 4: erster Schenkelabschnitt
- 4a: erstes Ende des ersten Schenkelabschnitts 4
- 4b: zweites Ende des ersten Schenkelabschnitts 4
- 5: Anzeige- und/oder Bedienelement
- 6: zweiter Schenkelabschnitt
- 6a: erstes Ende des zweiten Schenkelabschnitts 6
- 6b: zweites Ende des zweiten Schenkelabschnitts 6
- 7: Leuchteinrichtung
- 8: Fahrradbausatz
- 9: Lenkervorbau
- 9a: Lenkervorbauarm
- 9b: freies Ende des Lenkervorbauarms 9a
- 9c: Lenkerklemme
- 9d: Zwischenraum zwischen den Lenkervorbauarmen 9a
- 10: Ausgleichsgerade des ersten Schenkelabschnitts 4
- 11: Ausgleichsgerade des zweiten Schenkelabschnitts 6
- 12: Steuerrohr
- α: Winkel zwischen den Ausgleichsgeraden

## Patentansprüche

1. Fahrradbausatz (8) aufweisend eine Fahrradarmatur (1) und einen Lenkervorbau (9) mit zwei voneinander beabstandeten Lenkervorbauarmen (9a), wobei jeder Lenkervorbauarm (9a) ein freies Ende (9b) mit einer Lenkerklemme (9c) aufweist und mit den Lenkerklemmen (9c) eine Lenkstange (3) befestigbar ist, wobei die Fahrradarmatur einen Befestigungsabschnitt (2) zur Befestigung der Fahrradarmatur (1) an einer Lenkstange (3) und einen ersten Schenkelabschnitt (4) mit zwei Enden (4a, 4b) aufweist, wobei ein Ende (4b) des ersten Schenkelabschnitts (4) mit dem Befestigungsabschnitt (2) verbunden ist und der erste Schenkelabschnitt (4) ein Anzeige- und/oder Bedienelement (5) aufweist,
wobei
ein erstes Ende (6a) eines zweiten Schenkelabschnittes (6) der Fahrradarmatur (1) mit dem Befestigungsabschnitt (2) verbunden ist und der zweite Schenkelabschnitt (6) eine Leuchteinrichtung (7) aufweist, wobei die Lenkerklemmen (9c) und der Befestigungsabschnitt (2) der Fahrradarmatur (1) derart an einer Lenkstange (3) befestigbar sind, dass der erste Schenkelabschnitt (4) zumindest teilweise zwischen den Lenkervorbauarmen (9a) angeordnet ist, **dadurch gekennzeichnet, dass** das Anzeige- und/oder Bedienelement (5) Teil eines Fahrradcomputers ist.

2. Fahrradbausatz (8) nach Anspruch 1, **dadurch gekennzeichnet, dass** der erste Schenkelabschnitt (4) und der zweite Schenkelabschnitt (6) unlösbar mit dem Befestigungsabschnitt (2) verbunden sind.

3. Fahrradbausatz (8) nach einem der Ansprüche 1 oder 2, **dadurch gekennzeichnet, dass** die Leuchteinrichtung (7) verschwenkbar an dem zweiten Schenkelabschnitt (6) angeordnet ist.

4. Fahrradbausatz (8) nach einem der Ansprüche 1 bis 3, **dadurch gekennzeichnet, dass** der Befestigungsabschnitt (2) eine Lenkerklemme ist.

5. Fahrradbausatz (8) nach einem der Ansprüche 1 bis 4, **dadurch gekennzeichnet, dass** der Befestigungsabschnitt (2) zwei fluchtend zueinander angeordneten Öffnungen (2a) für die Durchführung einer Lenkstange (3) und eine die Mittelpunkte (2b) der zwei Öffnungen (2a) miteinander verbindende Längsachse (2c) aufweist, wobei der Lenkervorbau (9) und die Fahrradarmatur (1) derart ausgestaltet und anordnenbar sind, dass zwischen dem ersten Schenkelabschnitt (4) und jedem der Lenkervorbauarme (9a) in eine Richtung parallel zu der Längsachse (2c) des Befestigungsabschnittes (2) ein Spalt von maximal 5 % des lichten Abstandes zwischen den Lenkervorbauarmen (9a) in eine Richtung parallel zu der Längsachse (2c) des Befestigungsabschnittes (2) ausgebildet ist.

6. Fahrradbausatz (8) nach einem der Ansprüche 1 bis 5, **dadurch gekennzeichnet, dass** die Lenkerklemmen (9c) der Lenkervorbauarme (9a) und der Befestigungsabschnitt (2) der Fahrradarmatur (1) getrennt voneinander betätigbar sind.

## Claims

1. A bicycle set (8) comprising a bicycle fitting (1) and a handlebar stem (9) having two mutually spaced handlebar stem arms (9a), wherein each handlebar stem arm (9a) has a free end (9b) with a handlebar clamp (9c) and a handlebar (3) can be fixed with the handlebar clamps (9c), wherein the bicycle fitting has a fixing portion (2) for fixing the bicycle fitting (1) to a handlebar (3) and a first leg portion (4) having two ends (4a, 4b), wherein one end (4b) of the first leg portion (4) is connected to the fixing portion (2) and the first leg portion (4) has a display and/or operating element (5),
wherein
a first end (6a) of a second leg portion (6) of the bicycle fitting (1) is connected to the fixing portion (2) and the second leg portion (6) has a lighting device (7), wherein the handlebar clamps (9c) and the fixing portion (2) of the bicycle fitting (1) can be fixed to a handlebar (3) in such a way that the first leg portion (4) is arranged at least partially between the handlebar stem arms (9a), **characterised in that** the display and/or operating element (5) is part of a bicycle computer.

2. A bicycle set (8) according to claim 1 **characterised in that** the first leg portion (4) and the second leg portion (6) are non-releasably connected to the fixing portion (2).

3. A bicycle set (8) according to one of claims 1 and 2 **characterised in that** the lighting device (7) is arranged pivotably on the second leg portion (6).

4. A bicycle set (8) according to one of claims 1 to 3 **characterised in that** the fixing portion (2) is a handlebar clamp.

5. A bicycle set (8) according to one of claims 1 to 4 **characterised in that** the fixing portion (2) has two mutually aligned openings (2a) for the passage of a handlebar (3) therethrough and a longitudinal axis (2c) connecting the centre points (2b) of the two openings (2a) together, wherein the handlebar stem (9) and the bicycle fitting (1) are of such a configuration and can be so arranged that provided between the first leg portion (4) and each of the handlebar stem arms (9a) in a direction parallel to the longitudinal axis (2c) of the fixing portion (2) is a gap of a maximum of 5% of the internal spacing between the handlebar stem arms (9a) in a direction parallel to the longitudinal axis (2c) of the fixing portion (2).

6. A bicycle set (8) according to one of claims 1 to 5 **characterised in that** the handlebar clamps (9c) of the handlebar stem arms (9a) and the fixing portion (2) of the bicycle fitting (1) are actuable separately from each other.

## Revendications

1. Module de bicyclette (8) comprenant un dispositif de montage de bicyclette (1) et une potence de guidon (9) dotée de deux bras de potence de guidon (9a) espacés l'un de l'autre,
dans lequel chaque bras de potence de guidon (9a) présente une extrémité libre (9b) pourvue d'un dispositif de serrage de guidon (9c), et une tige de guidon (3) peut être fixée avec les dispositifs de serrage de guidon (9c), dans lequel le dispositif de montage de bicyclette présente une partie de fixation (2) destinée à la fixation du dispositif de montage de bicyclette (1) sur une tige de guidon (3), et une première partie de branche (4) pourvue de deux extrémités (4a, 4b), une extrémité (4b) de la première partie de branche (4) étant reliée à la partie de fixation (2) et la première partie de branche (4) comportant un élément d'affichage et/ou de commande (5), dans lequel une première extrémité (6a) d'une seconde partie de branche (6) du dispositif de montage de bicyclette (1) est reliée à la partie de fixation (2) et la seconde partie de branche (6) est pourvue d'un dispositif d'éclairage (7), les dispositifs de serrage de guidon (9c) et la partie de fixation (2) du dispositif de montage de bicyclette (1) pouvant être fixées sur une tige de guidon (3) de façon telle que la première partie de branche (4) est disposée au moins en partie entre les bras de potence de guidon (9a),
**caractérisé en ce que** l'élément d'affichage et/ou de commande (5) fait partie d'un ordinateur pour bicyclette.

2. Module de bicyclette (8) selon la revendication 1, **caractérisé en ce que** la première partie de branche (4) et la seconde partie de branche (6) sont reliées de manière inamovible à la partie de fixation (2).

3. Module de bicyclette (8) selon l'une des revendications 1 ou 2, **caractérisé en ce que** le dispositif d'éclairage (7) est monté à pivotement au niveau de la seconde partie de branche (6).

4. Module de bicyclette (8) selon l'une des revendications 1 à 3, **caractérisé en ce que** la partie de fixation (2) est un dispositif de serrage de guidon.

5. Module de bicyclette (8) selon l'une des revendications 1 à 4, **caractérisé en ce que** la partie de fixation (2) présente deux ouvertures (2a) disposées dans l'alignement l'une de l'autre pour le passage d'une tige de guidon (3) et un axe longitudinal (2c) reliant entre eux les centres (2b) des ouvertures (2a), la potence de guidon (9) et le dispositif de montage de bicyclette (1) étant configurés et pouvant être disposés de façon telle que soit réalisée, entre la première partie de branche (4) et chacun des bras de potence de guidon (9a), dans une direction parallèle à l'axe longitudinal (2c) de la partie de fixation (2), une fente de 5 % maximum de la distance libre entre les bras de potence de guidon (9a) dans une direction parallèle à l'axe longitudinal (2c) de la partie de fixation (2).

6. Module de bicyclette (8) selon l'une des revendications 1 à 5, **caractérisé en ce que** les dispositifs de serrage de guidon (9c) des bras de potence de guidon (9a) et la partie de fixation (2) du dispositif de montage de bicyclette (1) peuvent être actionnés séparément les uns des autres.
